# EUROPEAN PATENT APPLICATION

(11) **EP 0 962 270 A1**
(43) Date of publication of application: **08.12.1999**
(21) Application number: 99303920.5
(22) Date of filing: 20.05.1999
(51) Int. Cl.: B22C 7/02, B22C 9/04, F16H 41/28

(54) **A method for forming turbine hubs**

(30) Priority: 01.06.1998 US 87988
(71) Applicant: Ford Global Technologies, Inc., Dearborn, Michigan 48331 (US)
(72) Inventor: Boehlefeld, Matthew James, Westland, Michigan 48185 (US); Regan, Kevin P., Troy, Michigan 48098 (US); Wilkosz, Daniel Edward, Ypsilanti, Michigan 48197 (US); Smith, Eric Matthew, Northville, Michigan 48167 (US); Szuba, Joseph J., Dearborn, Michigan 48124 (US)
(74) Representative: Messulam, Alec Moses

(57) **Abstract**

A turbine hub (12) for a vehicle transmission torque converter is manufactured by forming a free form fabrication plastic or wax pattern (14) of the turbine hub (12), contacting the surface of the pattern with a ceramic material and forming a ceramic mold (22), removing the pattern from the ceramic mold, heating the ceramic mold, and filling the heated ceramic mold with sprayed metal. The turbine hub thus formed requires minimal surface finishing and no heat treating to improve mechanical strength.

## Description

The present invention relates generally to vehicle power train components, and, more particularly, to a method for manufacturing a turbine hub for a transmission torque converter.

Components for vehicle transmission torque converters, such as a turbine hub for example, are currently manufactured using powdered metal in a powdered metal forging process. After the forging process, the components require surface finishing to achieve a desired finish and require heat treating to relieve residual stress. Also, powdered metal is expensive to use and is subject to shrinkage. It is desirable to fabricate components using a process that is relatively simple and economical and does not require post process finishing or heat treatment.

More recently, rapid tools have been made using a spray forming process wherein tool steel particles are thermally sprayed onto a casting cavity surface of a mold while rapidly cooling the sprayed particles to effect a net shape tool. The process creates prototype stamping and injection mold tools used to create net shape parts that possess desirable physical properties. Although the process yields a rapid tool with greater strength, many rapid tools may still require a backing or other reinforcement. The mechanical strength required for these rapid tools is much less than that required for a working component, such as a turbine hub for a transmission torque converter.
Accordingly, it will be appreciated that it would be highly desirable to adapt the thermal spray process for making an actual working component that is mechanically strong and does not require post process heat treating or surface finishing.

According to one aspect of the present invention, a turbine hub for a vehicle transmission torque converter is manufactured by forming a machined or free form fabrication plastic or wax pattern of the turbine hub, contacting the surface of the pattern with a ceramic material and forming a ceramic mold, removing the pattern from the ceramic mold, heating the ceramic mold, and filling the heated ceramic mold with sprayed metal.

When the turbine hub is removed from the mold, no post process surface finishing is required in critical geometrical areas of the component. To minimize surface and internal porosity of the thermally sprayed component, the ceramic mold is pre-heated. This aids in promoting complete formation of the hub surface while the metal spray is still molten. The finished turbine hub has the required mechanical strength because the metal deposited and cooling are regulated to control the microstructure. Thus, an actual working component is manufactured relatively quickly and inexpensively using a metal spray process which requires minimal post process surface finishing and no heat treating.

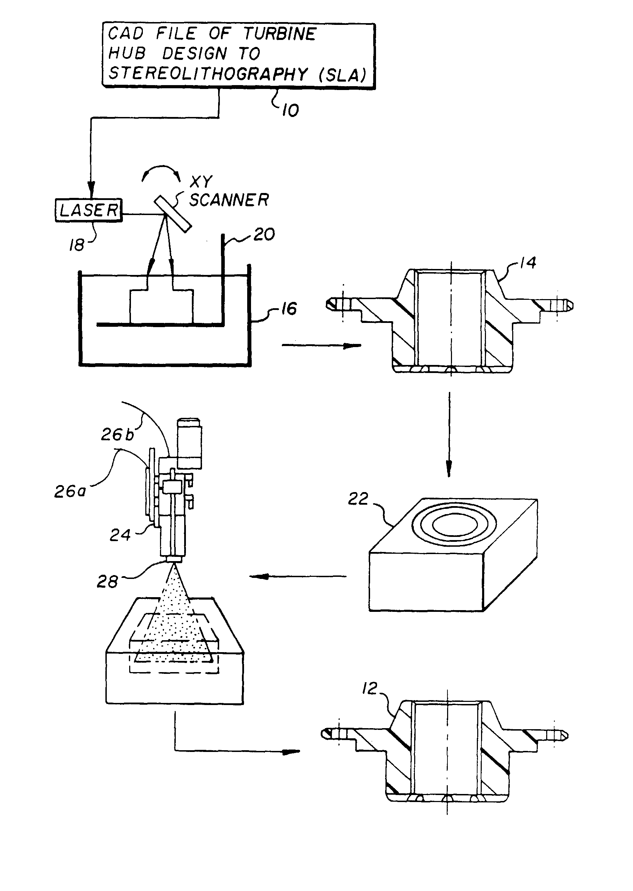

The invention will now be described, by way of example, with reference to the accompanying drawing which is a schematic flow diagram for making a spray formed turbine hub for a transmission torque converter according to the present invention.

Referring to the drawing, a computer aided design (CAD) file 10 of a desired component, such as a turbine hub 12 for a vehicle transmission torque converter, is used to create a plastic model 14 of the component. The model is preferably plastic or wax but may be wood, silicone or other material. CAD file 10 can be used in a free form fabrication process such as stereolithography (SLA), selective laser sintering or machining to create the three dimensional model 14. Stereolithography employs a vat 16 of photosensitive liquid polymer, an x-y scanning ultraviolet laser 18 and a z-axis elevator 20 in the vat 16. Focusing the laser beam on the liquid polymer cures the polymer causing a layer to solidify, and, as the elevator adjusts the height to expose more liquid polymer, the three dimensional plastic model 14 is formed.

A mould 22 that is the inverse of the model 14 is formed by contacting the surface of the model with a mold material, such as a ceramic slurry. The model is preferably placed in a box and the ceramic slurry is poured in the box about the model. Suitable ceramic materials are dental ceramic materials, investment slurries, fused silica, freeze cast alumina and like refractory materials. The mold material can also be sprayed onto SLA, low temperature alloys, etc. if parameters are set accordingly and alloy being sprayed allows such. After curing, the model is removed leaving the mold with a cavity whose surface is the negative of the surface of the model.

The cured ceramic mold is used as a receptor for a metal spray forming step, such as twin wire arc spraying. An arc spray gun 24 uses two consumable metal feed wires 26a, 26b. An electrical arc is struck between the feed wires 26a, 26b which melts the wires forming the desired metal alloy, and compressed gas carries the semi-solid melt stream from the arc spray gun nozzle 28 to the receiving ceramic mold. The metal is sprayed from the nozzle at a flow rate sufficiently fast that metal accumulates on the mold and cools as a mass so that a microstructure forms that strengthens the turbine hub without further heat treating. Flow rates up to about 200 pounds per hour have proved effective. Residual stress is minimized by regulating the cooling rate of the deposited metal. Regulation can be achieved by varying the flow rate of the metal and gas propellant, and by regulating the size of the metal particles in the spray. Particle size can vary from about 5 microns to about 500 microns.

It is also desired that the finished turbine hub be free of pores. Surface pores are less likely to form when the metal spray remains liquid upon contacting the surface of the mold for a time sufficient for the turbine hub surface to form completely without voids. Faster metal spray flow rates or higher initial metal spray temperatures allow the surface to form while the spray is still liquid. While proper setting of these spray parameters is strongly dependent on the geometry of the component being created, it has been discovered that heating the ceramic mold before applying the metal spray can dramatically reduce the amount of pores witnessed at the surface of the spray form. Preheating the mold to a temperature near that of the depositing metal spray assures that the metal remains liquid long enough for the surface to form without pores. Temperatures are generally in the range of 300°C to 400°C but may be as high as 1000°C. Preheating the mold allows metal spray rates to be selected for optimum control of the spray without sacrificing surface finish or mechanical strength.

It will be now appreciated that there has been presented a method for manufacturing a turbine hub for a torque converter of a vehicle transmission. The method includes forming a free form fabrication pattern of the turbine hub, covering the pattern with a ceramic material and forming a ceramic mold, removing the pattern from the ceramic mold, filling the heated ceramic mold with metal using twin wire arc spraying, and removing the finished turbine hub from the ceramic mold. The mold is filled with sprayed metal at a flow rate sufficient for the sprayed metal to cool as a mass thereby forming a microstructure that strengthens the turbine hub. Flow rates of about 0.05 pounds per second are effective to quickly fill the mold and to allow the sprayed metal to cool as a mass. Lower flow rates can be used but more time will be required to fill the mold. The method can include heating the mold prior to filling. Heating the ceramic mold to a temperature sufficient to maintain the sprayed metal in a molten state as the metal contacts the ceramic mold promotes forming a turbine hub with a surface substantially free of surface and internal pores. Preferably, the mold is heated to a temperature near the temperature of the depositing metal spray. The method produces a turbine hub that has reduced surface porosity and that does not require further heat treating.

While the invention has been described with particular reference to a preferred embodiment, it will be understood by those skilled in the art that various changes may be made and equivalents may be substituted for elements of the preferred embodiment without departing from invention. For example, the ceramic molds may be replaced with low temperature alloys or actual plastic molds by adjusting spray parameters accordingly. Also, an induction furnace can be used to heat metal which is then sprayed from a nozzle into the mold instead of the twin wire arc spray gun.

## Claims

1. A method for producing a turbine hub for a vehicle transmission torque converter, comprising the steps of:
forming a free form fabrication (FFF) pattern (14) of the turbine hub (12), said pattern having a surface that is a positive of the surface of the turbine hub;
contacting said surface of said pattern with a ceramic material and forming a ceramic mould (22), said ceramic mold (22) having a surface that is a negative of the surface of the turbine hub;
removing said pattern (14) from said ceramic mould (22);
heating the ceramic mould (22);
filling said heated ceramic mold (22) with metal using twin wire arc spraying; and
removing the finished turbine hub from the ceramic mold.

2. A method as claimed in claim 1, wherein the heating step further comprises heating the ceramic mold to a temperature near the temperature of the depositing metal spray.

3. A method as claimed in claim 1, wherein the heating step further comprises heating the ceramic mold to a temperature sufficient to maintain the sprayed metal in a molten state as the sprayed metal contacts the ceramic mold to thereby form a turbine hub with a surface substantially free of pores.

4. A method as claimed in claim 1, wherein said ceramic material is selected from a group consisting of dental ceramic materials, investment slurries, fused silica, freeze cast alumina and refractory materials.

5. A method as claimed in claim 1, wherein the free form fabrication forming step further comprises using selective laser sintering to create the pattern of the turbine hub from a computer aided design (CAD) file.

6. A method as claimed in claim 1, wherein the free form fabrication forming step further comprises using stereolithography to create the pattern of the turbine hub from a computer aided design (CAD) file.

7. A method as claimed in claim 1, wherein the filling step further comprises filling at a flow rate of about 0.05 pounds per second so that sprayed metal cools as a mass.

8. A method as claimed in claim 1, wherein the filling step further comprises filling at a rate sufficient for the depositing metal to cool as a mass thereby forming a microstructure that strengthens the turbine hub.

9. A method for producing a load bearing vehicle power train component, said component having a surface, said method comprising the steps of:
forming a free form fabrication (FFF) pattern of the component, said pattern having a surface that is a positive of the surface of the component;
contacting said surface of said pattern with a ceramic material and forming a ceramic mold, said ceramic mold having a surface that is a negative of the surface of the component;
removing said pattern from said ceramic mold;
filling said ceramic mold with metal using twin wire arc spraying at a flow rate sufficient for the sprayed metal to cool as a mass thereby forming a microstructure that strengthens the component; and
removing the finished component from the ceramic mold.

10. A method for producing a turbine hub for a vehicle transmission torque converter, comprising the steps of:
forming a pattern of the turbine hub, said pattern having a surface that is a positive of the surface of the turbine hub;
contacting said surface of said pattern with a mold forming material and forming a mold, said mold having a surface that is a negative of the surface of the turbine hub;
removing said pattern from said mold;
heating the mold;
filling said heated mold with metal spray; and removing the finished turbine hub from the mold.
